# EUROPEAN PATENT APPLICATION

(11) **EP 2 135 821 A1**
(43) Date of publication of application: **23.12.2009**
(21) Application number: 08741811.7
(22) Date of filing: 11.03.2008
(51) Int. Cl.: B65D 83/00, B67D 1/04, B01D 35/02

(54) **DEVICE FOR TREATING AND PURIFYING A LIQUID PRODUCT**

(30) Priority: 13.03.2007 RU 2007109209
(71) Applicant: Obschestvo S Ogranichennoi Otvetstvennostiyu "Eurostandart", Moscow 107-497 (RU)
(72) Inventor: KISTEREV, Valeriy Evgenyevich, Moscow, 105264 (RU); ZHERDEV, Pavel Dmitrievich, Moskovskaya obl., 141021 (RU)
(74) Representative: Sonn & Partner Patentanwälte
(86) International application number: PCT/RU2008/000135
(87) International publication number: WO 2008/111877

(57) **Abstract**

The invention substantially relates to the distillery industry. Said invention is **characterized in that** each portion of vodka poured from a bottle into a drinking vessel is treated and purified prior to the consumption thereof by a consumer by pushing it out from the bottle at an optimal rate through a primary filter material, a sorbing agent or a mixture thereof and a secondary filter material, which are placed inside a bottle neck or at the exit therefrom, by means of a specified positive air pressure formed inside the bottle, when necessary, with the aid of a compressed gas cylinder arranged outside the bottle.

## Description

The invention relates to the food industry, in particular to the distillery industry. The invention is intended for the individual treatment and purification of each portion of a liquid product (vodka) poured from the bottle (container) at the time before its consumption by the consumer himself.

There exists a device for treatment and purification of a liquid product (see US patent No. 6193886 dated 27.02.2001), containing a cartridge body connected to the neck of the bottle and filter located therein, and an air supply means.

The imperfection of the existing device is low efficiency of the cartridge employed, caused by pushing through it liquid products with different levels of purification and the impossibility to use bottles with rigid body.

The technical result achieved by this invention is the elimination of the said imperfection by creating a more comfortable and simple mechanism to provide the required excess of the air pressure in the internal volume of the bottle with the liquid product and allocation of a filter throughout the cross section of the body of the cartridge.

The purpose of this invention also is to create a simple assembly
to supply the compressed external air into the internal volume of the vessel with a liquid.

The said result is achieved by fixing of the filter on the internal surface of the body of the device for treatment and purification of a liquid product, which contains a container, a cartridge having a body which is connected to the neck of the bottle and contains the filter, and air supply means, which includes a container with pressurized gas, fixed on the bottle or embedded in its body and connected to the tube which is connected to the air supply assembly into the bottle. The air supply assembly may be made of a tube and an end-to-end channel made in the body of the cartridge; or by a sealing ring element allocated between the body of the cartridge and the neck of the bottle, airtightly connected to the tube and the channels aligned with it, made in the body of the cartridge, on its internal surface and limited by the surface of the neck of the bottle or the aperture executed in a bottle tightly connected to a tube by means of tighting element. The body of the cartridge may be filled with the following sequentially placed filter components: rough filtering material; sorbing agent or a mixture thereof and fine filtering material.

To prevent splashing, the outlet orifice of the body is fitted with a spreader. The body of the cartridge may have airtight connection to the neck of the bottle either through a placement spot with directional internal thread, or through a placement spot with a fitting, i.e. a connection which when screwed or fitted by a machine, will always be aligned with the end-to-end channel towards a particular spot of the bottle. The placement spot for connection of the body to the neck of the bottle may be made with a lock holder in the form of a ring lug on the internal surface of the placement spot to engage with the ring collar on the outer surface of the neck of the bottle, preventing detachment of the cartridge body from the neck of the bottle. The device has a decorative sealing cap attachable to the body with a thread, which may be made with an opening holder. The container with compressed gas, for the convenience of use, is made with an opening lever and with an attached by a tube pressure and gas discharge stabilizer.

The essence of the invention is illustrated by the drawings.
Fig. 1 schematically shows the device with gas supplied under pressure inside the bottle using a specially designed channel into the body of the cartridge, which is connected to the neck of the bottle using the placement spot with a fitting.
Fig. 2 shows the same with thread connection of the cartridge and the bottle.
Fig. 3 schematically shows the device with gas supplied under pressure inside the bottle using the sealing ring element.
Fig. 4 shows the same with thread connection of the cartridge and the bottle.
Fig. 5 shows the device with gas supplied under pressure into a bottle through an additional aperture schematically represented.
Fig. 6 shows the same for a variant with carving connection of a cartridge and a bottle.

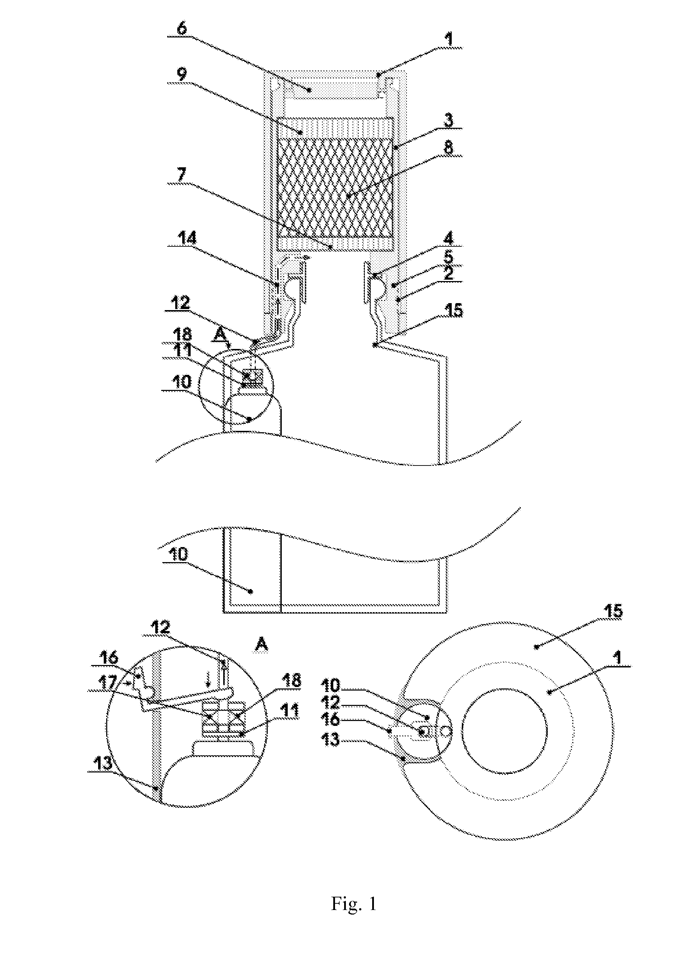

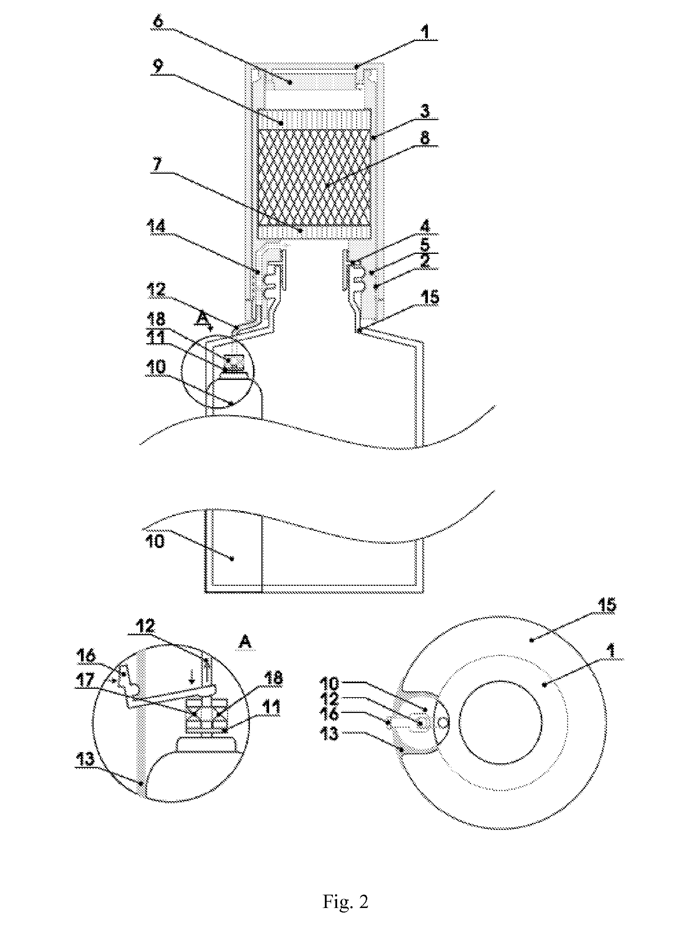

The first example of the device according to the invention is shown in Figs. 1 and 2.

Apart from the vessel, the device contains three main components: the treatment and purification assembly, an air supply means and an air supply assembly into the bottle.

The treatment and purification assembly consists of:
- A decorative sealing cap 1 with internal thread 2 for screwing onto the body 3 of a cartridge;
- an airtight sealing element 4 made of the elastic plastic;
- a body 3, which has a placement spot 5 onto the neck of the bottle (in the second version, the placement spot contains a thread),

a restrictive spreader 6 with channels for the flow, a thread 2 of its outer surface for screwing the sealing cap 1 and a filter, consisting of, sequentially allocated, rough filtering material 7, sorbing agent 8 or a mixture thereof, and a fine filtering material 9.

The air supply device for creating the required pressure in the interior of the bottle is a container 10 with compressed gas, made of hard metal, connected through a gas pressure and discharge stabilizer 11 to an air supply tube 12.

The container with compressed gas in the body 13 is located outside the bottle and ergonomically fits into the bottle design, in accordance with the design of the product.

The air supply assembly consists of the air supply tube 12, an air supply endto-end channel 14, made in the body of the cartridge, through which the pressurized gas from the container, via the pressure stabilizer, is supplied inside the bottle 15.

The device shown in Figs. 1 and 2 is operated as follows.

A sealed bottle of vodka is taken in hands and opened by unscrewing the decorative cap 1 and is turned with its neck down over the drinking vessel. The vodka, contained in the bottle is poured through the orifice in the encapsulating element 4 to the rough filtering material 7, and a part thereof, under the effect of gravitational forces, passes through it and enters the space 3 in the cartridge filled with sorbing agent 8 or a mixture thereof, which provides the required level of vodka treatment. Having passed through the sorbing agent 8, the vodka is unable to pass through the fine filtering material 9 by the mere action of the gravitational forced due to decrease of the air pressure in the interior of the bottle 15 as the consequence of formation of the tenuous air and strong overall resistance of the filtering materials and the sorbing agent. To push the vodka through the filtering materials and the sorbing agent, the consumer presses the gas container opening lever 16, thereby opening the container. As a result of which, the gas from the container, under pressure, through the gas pressure and expense stabilizer 11, the air supply tube 12, the air supply channel 14 in the body of the cartridge and the orifice in the airtight sealing element 4, is supplied to the interior of the vessel. The lever is kept pressed until the pressure inside the bottle reaches the value sufficient to provide the required speed pouring vodka or filling the vessel. Having filled the drinking vessel the consumer turns the bottle with its neck up. The excessive air pressure in the bottle will push a part of the vodka from the space filled with sorbing agent, through the filtering material 9 into the space in the body of the cartridge above it, limited by the restrictive spreader, while the residual pressure is released through the vodka flow channels in the restrictive spreader of the cartridge outside. The restrictive spreader configuration prevents vodka splashes produced by pressure release.

The decorative sealing cap is screwed onto the body of the cartridge using the threaded connection and encapsulates the bottle. The remaining vodka gradually flows back from the cartridge, under the effect of gravitational forces, into the bottle.

The operation may be repeated as required.

The means 11 for the gas pressure and discharge stabilization represents a membrane with a selected, calibrated orifice. Increasing the gas expense leads to increasing the pressure in the bottle, which causes the increase of the liquid outflow speed from the bottle, and, as the result, leads to pressure stabilization on the required level. Decreasing the gas expense, the process is reversed and the pressure regains its norm, that is, using a membrane with a selected calibrated orifice enables stabilization of the liquid outflow speed. On enacting the stabilizer, the required pressure is immediately set inside the bottle, and the vodka pours out with the speed defined by the resistance of the cartridge. To avoid formation of a pressure inside the bottle, exceeding the maximum permitted, after the gas expense stabilizer there are installed a bypass alarm valve 17 and a shut-off safety valve 18. The bypass alarm valve 17 is made in the form of a nipple of soft resistant material, one end of which is airtightly connected to the air supply assembly, and the other, normally closed, is free.

On reaching the required level of pressure in the bottle, the free end of the nipple opens, releasing the gas under pressure from the air supply assembly to the outside with a peep. The alarm valve serves to notify the consumer about reaching the required level of pressure in the bottle. When enacted, a peep is produced, and the consumer stops pressing the gas container opening lever. The shut-off safety valve 18 is made in the form of an orifice sealed by an airtight membrane with a specific tensile strength limit, which is destroyed if the pressure in the bottle exceeds the permitted level. The shut-off valve is introduced in the design of the device to ensure safety of the consumer.

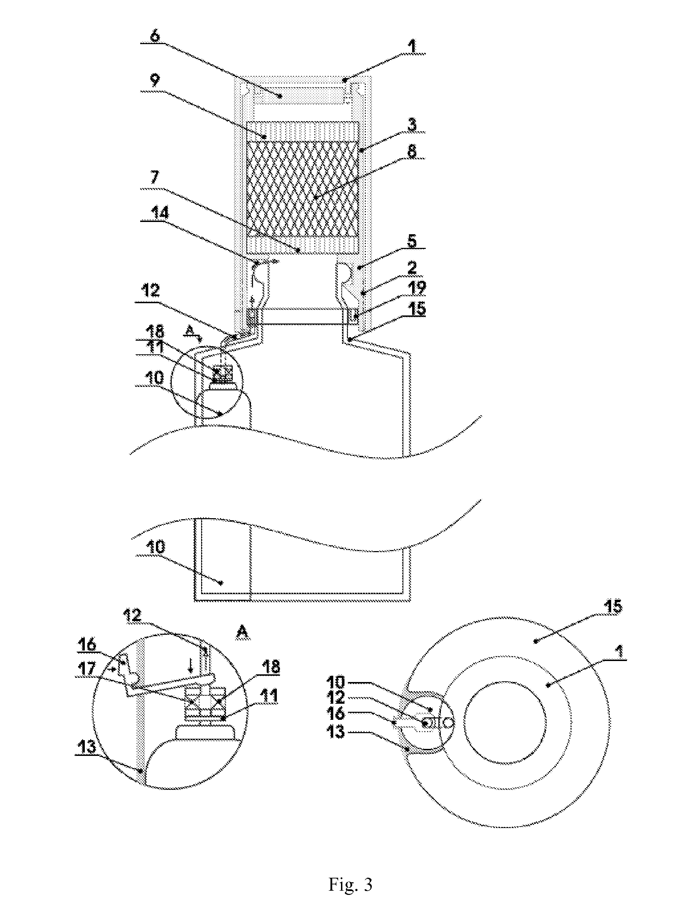

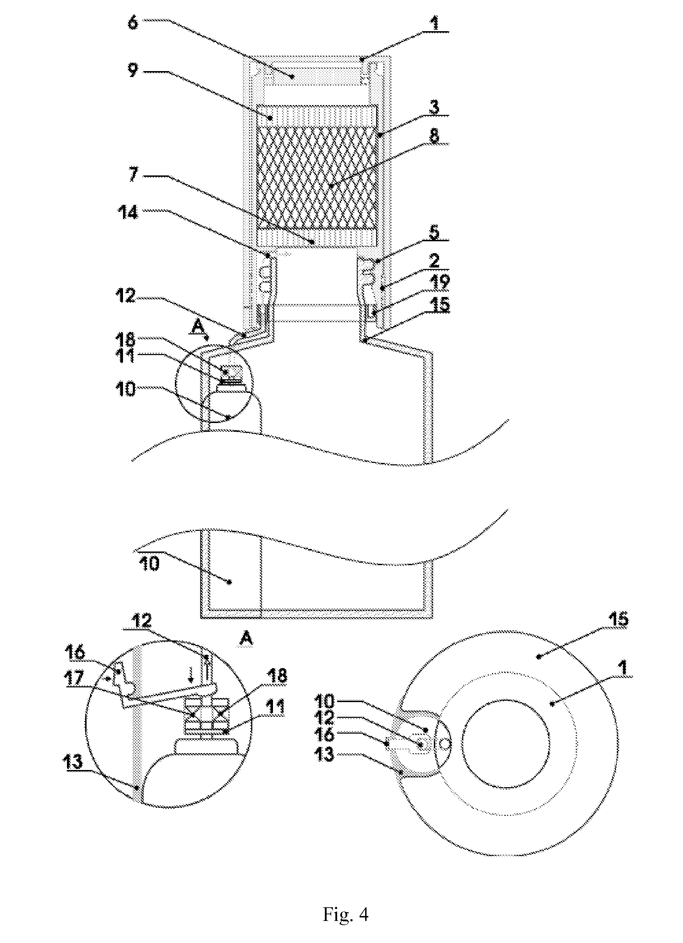

The second example of implementation of the device is shown in Figs. 3 and 4. It is distinguished by the gas supply assembly consisting of: the air supply tube 12; an air supply sealing ring 19 and air channels 14, made in the elements of internal surface of the cartridge along the external surface of the neck of the bottle,
through which the gas from the pressurized container is administered to inside the bottle 15.

The device shown in Figs. 3 and 4 is operated similarly to the one described above.

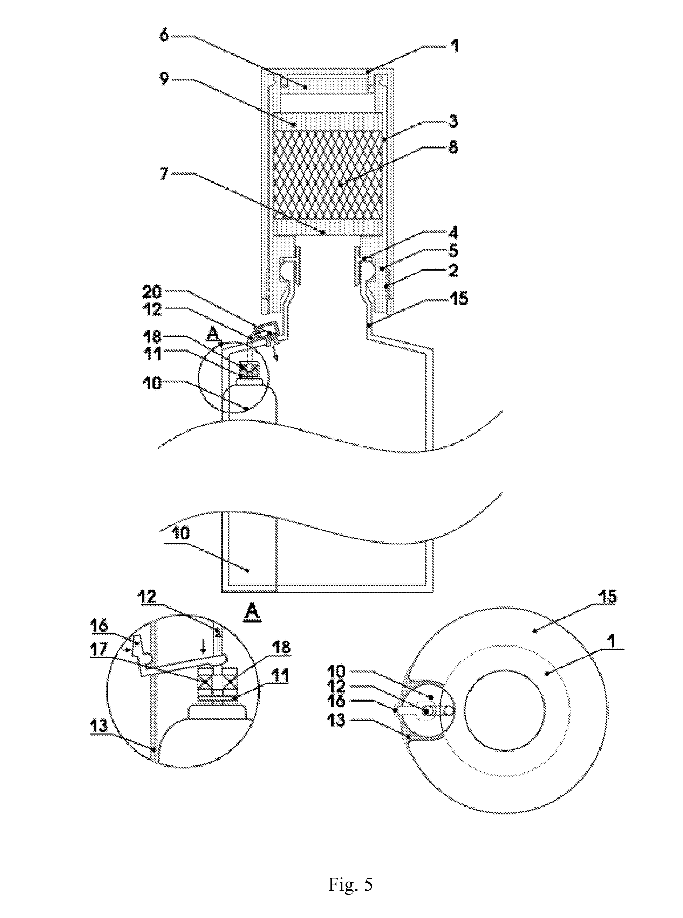

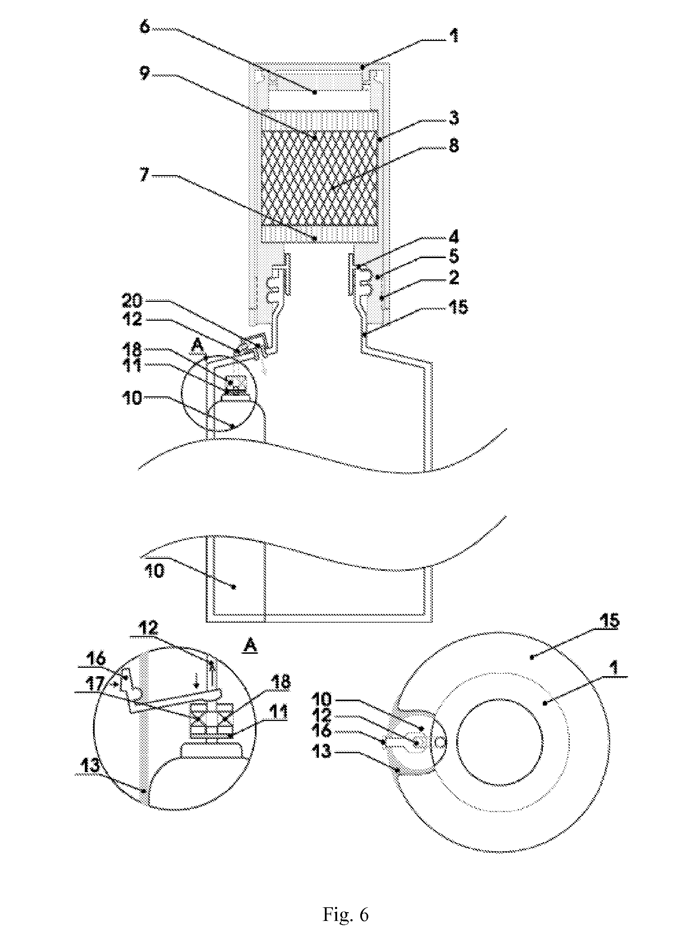

The third embodiment of the device is presented in Figs. 5 and 6, its feature consists that the air-conducting tube 12 is connected by one end to a cylinder 10 with the compressed gas through the stabilizer of pressure or the gas expense, and other end with specially formed aperture in a bottle through a sealing element 20 through which gas from cylinder capacity under pressure arrives in an internal cavity of a bottle.

The device according to this example works similarly as described above.

## Claims

1. Device for treatment and purification of a liquid product located in a bottle, containing a cartridge comprising a body connectable to the neck of the bottle and a filter located inside it, and an air supply means, **characterized by** fixing the filter on the interior surface in the body, and in that the air supply means includes a pressurized gas container embedded into its body and fixed to the bottle, connected to the tube, which is airtightly connected to an end-to-end channel in the body of the cartridge or airtightly connected through a sealing element located between the body of the cartridge and the neck of the bottle, aligned with the channels made in the internal surface of the body of the cartridge and limited by the external surface of the neck of the bottle.

2. The device according to claim 1, **characterized in that** the knot of giving of air is formed by a additional aperture executed in a bottle tightly connected to a tube.

3. The device according to claim 1, **characterized by** the filter being formed of the sequentially allocated rough filtering material, sorbing agent or a mixture thereof and a fine filtering material.

4. The device according to any one of claims 1 to 3, **characterized by** the outlet orifice on the body being fitted with a spreader.

5. The device according to any one of claims 1 to 3, **characterized by** the body of the cartridge having an airtight connection to the neck of the bottle using the placement spot with directional internal thread.

6. The device according to any one of claims 1 to 3, **characterized by** the body of the cartridge having an airtight connection to the neck of the bottle using the placement spot with a fitting.

7. The device according to any one of claims 1 to 3, **characterized by** the assembly of the body connection to the neck of the bottle being made in the form of a lock holder.

8. The device according to any one of claims 1 to 3, **characterized by** a decorative cap airtight fitted on the body.

9. The device according to claim 7, **characterized by** the cap being fitted on the body using a thread with the first opening holder.

10. The device according to claim 1 or 2, **characterized by** a pressurized gas container with opening lever and a gas pressure and discharge stabilizer, connected to a tube.

11. The device according to claim 9, **characterized by** the gas pressure and discharge stabilizer in the air supply device being made of a membrane with a calibrated orifice.

12. The device according to claim 9, **characterized by** the air supply device including a bypass alarm valve, made in the form of a nipple made of a soft resistant material, one side of which being airtightly connected to the air supply assembly, and the other, normally closed, being free.

13. The device according to claim 9, **characterized by** the air supply device including a safety valve, made in the form of an orifice in the air supply node, sealed with an airtight membrane with a specific tensile strength limit, which is destroyed if the pressure in the bottle exceeds the permitted level.
